# EUROPEAN PATENT SPECIFICATION

(11) **EP 1 719 734 B1**
(45) Date of publication and mention of the grant of the patent: **13.01.2010**
(21) Application number: 06252283.4
(22) Date of filing: 28.04.2006
(51) Int. Cl.: B68C 1/14

(54) **Security line for a saddle**
Sicherheitsriemen für einen Sattel
Lanière de sécurité pour une selle

(30) Priority: 03.05.2005 GB 0508809
(43) Date of publication of application: 08.11.2006
(73) Proprietor: Gorman, George, Aberdeen AB11 8DR (GB)
(72) Inventor: Gorman, George, Aberdeen AB11 8DR (GB)
(74) Representative: Watson, Craig Simon

(56) References cited:
- EP-A- 0 892 192
- BE-A6- 1 010 733
- DE-A1- 2 909 113
- DE-A1- 3 941 835
- DE-C- 193 524
- US-A- 4 934 691

## Description

The present invention relates to a device for breaking the fall of a rider from a horse or the like and a saddle assembly including a saddle equipped with such a device.

Horse riding is a popular sport, but can be inherently dangerous if a horse unseats a rider, or the rider loses balance and falls from the horse. Serious injuries can result from such falls, particularly back and head injuries. It is generally accepted that riders should not be secured to animals to prevent them from falling, as this could be dangerous for the rider in the event that they lose control of the animal and it bolts under low lying branches for example, or if the rider is dragged behind the animal. Thus, riders are typically taught to let go and fall from a horse cleanly when they lose balance or when the horse bolts.

German patent, publication number DE2909113, assigned to Franz Jandrey describes a handle-like fixed point grasp to assist a horse rider especially when jumping.
German patent, publication number DE3941835, describes a saddle assembly comprising a saddle and a martingale corresponding to the preamble of claim 1.

According to a first aspect of the present invention there is provided a saddle assembly as claimed in claim 1.

The device provides an aid for riders who fall from a horse or the like and enables the rider to make a more controlled and safer descent. In the event of a fall from an animal, use of the device enables the rider to maintain a semi-upright position. Since the second end portion is capable of being gripped by a rider, the head and back of the rider are more likely to be clear from the ground and the rider will be landed over the shoulder of the horse, which is safer.

The connection means comprises two connectors for connecting the first end portion to the saddle in two separate locations. Thus the device can comprise one member and two connectors arranged in a Y-shaped configuration.

The first end portion connectable to the saddle is advantageous since any load applied to the device in use will be borne in a mid region on the back of the horse or the like.

Each connector can comprise a length of webbing. A smooth webbing material is advantageous since it will limit any pain experienced by the horse or the like if the webbing material comes into contact with the animal.

Each connector can comprise a fixing means. The fixing means can comprise an anchor tie for fixing the device to the load bearing portion of the saddle.

Each connector is connected to the stirrup bars of the saddle. The connectors can further comprise one or more links for coupling the or each member to the saddle in use, wherein the links are arranged to break on application of a predetermined force thereto.

Accordingly, these links are provided to act as sacrificial links in use, to dissipate some of the energy of the fall, since they are designed to break on application of a predetermined force. Therefore, when the device is in use, the links coupling the device and the saddle can be used to weaken the impact or force of the fall.

The stop member can comprise a rim protruding radially outwardly with respect to the or each member. The stop member can be arranged such that it is proximate to the second end portion. The stop member can be arranged to act as an impediment to prevent the device from slipping out of the rider's hand when in use.

Compression means can be provided on the member, preferably in the region of the second end portion. The compression means can be compressible by a rider, thereby acting as a shock absorber. Preferably the compression means are compressible in an axial direction, said axial direction defined by the member.

A neck portion of the compression means may be provided to encourage the compression of the compression means, the neck portion having a smaller radius than a main part of the compression means. The width and/or length of the neck portion can be varied to alter the compressive force required for deformation thereof. In general, the shorter axial length of the neck portion the less force required for compression and the longer axial length of the neck portion, the greater the force required for compression thereof.

Preferably, the compression means is adapted to compress to a greater extent than the member. Preferably, the member is adapted to compress by a negligible extent.

The compression means can comprise two or more portions, each shaped to compress on application of a predetermined load. The portions can be shaped to compress on application of different predetermined loads. Each shaped portion can comprise a neck portion.

The compression means can be manufactured from compressible foam rubber.

The stop member can be provided as part of the compression means, such that application of a force to the stop member causes compression of the compression means, typically in an axial direction.

Preferably, the compression means comprising the stop member has a bore through which the member extends.

The device can comprise two members provided adjacent each other which connect with at least one, preferably two pairs of adjacent connectors, each pair of connectors connectable to the saddle, such that in use, the connection between one member and the saddle will not be broken should another member or one connector break.

The length of the or each member can be adjustable. The or each member can be provided with adjuster means. Thus the length of the device can be altered to suit the requirements of the rider or the nature of the riding they intend to do.

The device can be manufactured from synthetic rope.

The saddle assembly is useful in conjunction with the usual horses tack. Reins are typically provided to be held by the rider for controlling the horse. However, the reins are not load bearing and move with the horse's head. The saddle assembly comprising the device attached to the saddle, is a separate, steady aid for a rider. Attaching the device to a load bearing portion of the saddle is advantageous as it represents the most stable position for the device and is likely to be the least damaging to the horse. The device is suitable for attachment to a standard English saddle.

Connector means connect the member to load bearing portions of the saddle in spaced apart locations. Connector means connect the member to stirrup bars provided on the saddle.

Two members are coupled to the saddle in two spaced apart locations.

The device coupled to the saddle at two spaced apart locations can occupy a Y-shape. This has the advantage that when a rider falls, the horse carries a certain amount of the strain on its back without a part of the saddle to which the device is attached, such as the stirrup bar, from taking all the load of the falling rider.

The device can also be used to allow a rider to regain their balance. The device can also be used to allow a rider to control their descent on dismounting from the horse or the like.

The device is not limited to use on a horse, as it may be used on other animals such as a donkey, pony etc.

Preferably the device also aids to orient the rider so that their head is uppermost and preferably so that they are less likely to land on their back or head.

Embodiments of the present invention will now be described with reference to and as shown in the following drawings, in which:-
Fig. 1 is a top view of a device for a saddle assembly according to the first aspect of the present invention;
Fig. 2 is a top view of the device for a saddle assembly according to another embodiment of the first aspect of the present invention;
Fig. 3 is a side perspective view of a saddle assembly according to the second aspect of the present invention; and
Fig. 4 is a side view of a shock absorber
Fig. 5 is a side perspective view of a saddle assembly according to a further embodiment of the present invention.

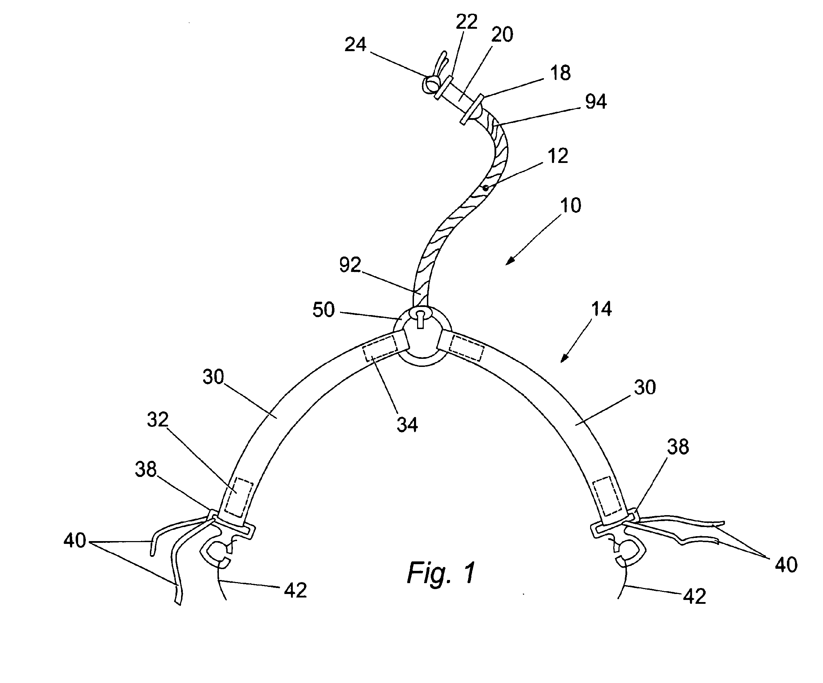

A device for breaking the fall of a rider (not shown) from a horse or the like is shown generally at 10 in figures 1 to 3.

The device 10 of Fig. 1 comprises a flexible member 12 and connector means 14. The flexible member 12 has a first end portion 92 and a second end portion 94 and preferably comprises a synthetic rope, such as polyester.

Towards the second end portion 94 there is provided a hand stop 18 in the form of a rim extending radially outwardly relative to the flexible member 12. Similarly, an end stop 22 is provided in the form of a rigid rim extending radially outwardly and is prevented from sliding off the flexible member 12 by a knot 24. The hand stop 18 also comprises a shock absorber means 20. The shock absorber means 20 is positioned between the hand stop 18 and the end stop 22. According to this embodiment, the shock absorber means 20 comprises compressible foam rubber. Although, any form of compression means capable of deformation will be suitable for use as the shock absorber means 20.

The first end portion 92 is tied to a metal ring 50. Also attached to the metal ring 50 are two strips of webbing 30. Each length of webbing 30 is attached to the ring 50 by means of a doubled over end portion 34 which is stitched to form an aperture (not shown). The aperture accommodates the metal ring 50. Similarly, an opposing end portion 32 is doubled over and stitched to create an aperture (not shown), which accommodates a spring-loaded clip 38. The spring-loaded clip 38 is provided with an anchor line 40 and a link 42 attached thereto. The anchor line 40 and the link 42 can be used for coupling the device 10 to a saddle. The anchor line 40 is attached to a load bearing portion of a saddle whereas the link 42 is attached to any suitable part of the saddle, as described in more detail below.

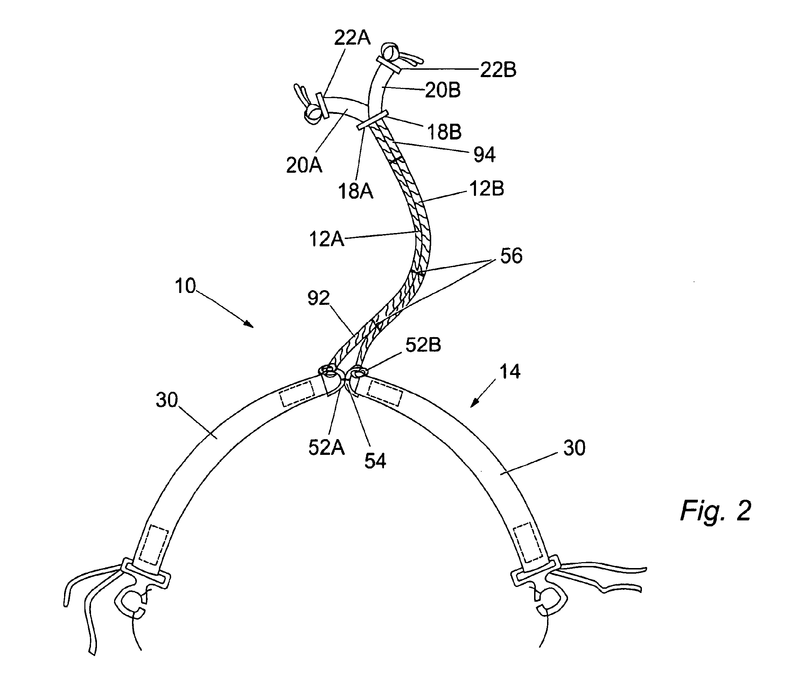

The device shown in fig. 2 is similar to the fig. 1 embodiment, but comprises two flexible lines 12A and 12B. Each line 12A, 12B is provided with a hand stop 18A, 18B, shock absorber 20A, 20B and end stop 22A, 22B towards the second end portion 94 as described for fig. 1 above. Flexible lines 12A, 12B are coupled in adjacent relation using ties 56.

At the first end portion 92 the flexible lines 12A, 12B are each provided with a separate D-ring 52A, 52B. The D-rings 52A, 52B are joined by a tie 54. The connector means 14 are the same as those previously described for Fig. 1.

The advantage of the system such as that shown in Fig. 2 is that in the event of failure or breakage of any of the attachment means coupling the device 10 to a saddle, there is an in-built system redundancy since there are effectively two devices independently attached at separate points to load bearing portions of the saddle. As shown in Fig. 2 these are coupled together to facilitate use of the device by the rider, while providing the system with in-built redundancy.

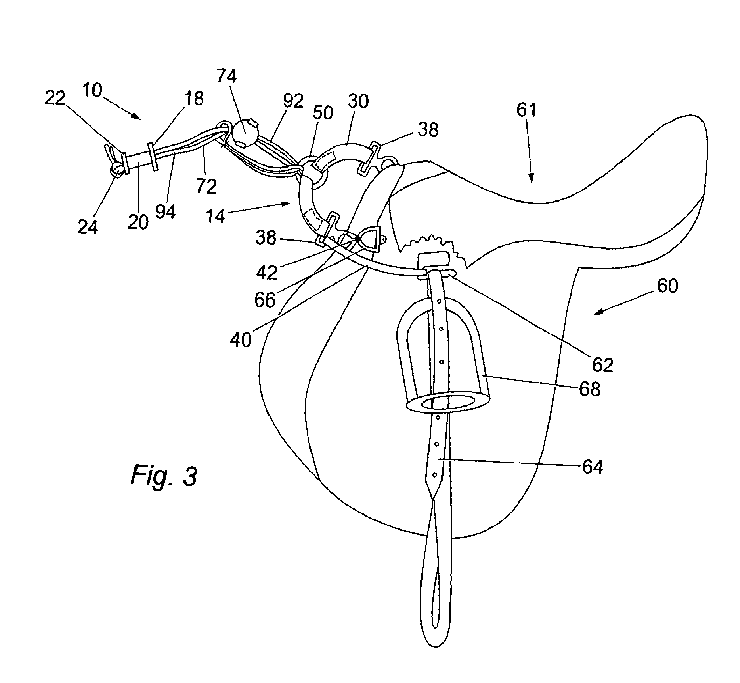

Fig. 3 shows a saddle indicated generally at 60 with the device 10 attached thereto by connector means 14. The saddle 60 has a seat portion 61 and is provided with two stirrup bars 62 secured to opposing sides of the saddle 60 either side of the seat portion 61. The stirrup bars 62 are C-shaped and have leather straps 64 slotted therein for supporting stirrups 68. In use, each stirrup 68 accommodates a foot of the rider. Thus, each stirrup bar 62 to which the stirrup 68 is attached via the leather strap 64 is necessarily a load bearing part of the saddle 60.

Another advantage of the device 10 is that it can be used in conjunction with a traditional English saddle without modification thereof. As well as being load bearing portions of the saddle 60, the stirrup bars 62 are also adapted to cope with jolts experienced when a rider mounts a horse.

The device 10 shown in fig. 3 comprises a flexible line 72 which is provided with a ball stop adjuster 74 for adjusting the length of the line 72. The anchor ties 40 secure the device 10 to the saddle 60. Each anchor tie 40 attaches directly to the corresponding stirrup bar 62. Links 42 are used to attach the spring-loaded clips 38 to D-rings 66, which D-rings 66 are fixed to the saddle 60.

The ties 40 and the links 42 used in the present embodiment are advantageous since they do not require modification of a standard English saddle 60. D-rings 66 are commonly provided on saddles. However, any other appropriate form of fixing means or connector means 14 can be used.

Before use, the length of the flexible line 72 can be adjusted depending on the requirements of the rider. Adjustment of the flexible line 72 is achieved using the ball adjuster 74.

The rider can mount the saddle 60 in the usual manner and sit in the seat portion 61, while the rider's feet are accommodated in the stirrups 68.
It is usual for the rider to hold reins (not shown) for controlling the movement of the horse or other animal. Notably, the reins are never attached to a load bearing part of the horse. The rider also holds the flexible member 72 in one hand.

In the event that the rider is dislodged from the seat portion 61 and begins to fall from the saddle 60, they can grasp firmly the device 10 in the region of the second end portion 94 of the flexible line 72. This is in contrast with the general teaching that a rider should let go as soon as they start to fall from an animal. The line 72 is more stable than the reins as the device 10 is attached to load bearing portions of the saddle 60 in a mid portion of the horse, whereas the reins are attached to, and therefore move with, the horses head.

If the rider's grip on the flexible member 72 slips as the rider falls, the rider's clenched hand will eventually abut the hand stop 18. The hand stop 18 prevents the device 10 from slipping out of the rider's grasp altogether. As the rider's hand abuts the hand stop 18, the shock absorber 20 between the hand stop 18 and end stop 22 will be at least partially compressed, thereby cushioning the rider's hand from a jolt experienced as the impact of the falling rider is taken up by the device 10 as it becomes taut, which reduces some of the initial impact of the fall.

Once sufficient force is applied to the connector means 14, for example, when the device 10 becomes taut, the links 42 attaching the spring loaded clip 38 to the D-ring 66 are arranged to break, further cushioning the fall of the rider and dissipating some of the energy associated with the fall.

Since the rider is holding onto the device 10, their body will tend to orientate during the fall so that their head is further from the ground than their legs or lower part of their body. This will also bring their back upright.

The rider can then let go of the device 10 and fall to the ground.

The device 10 allows a rider to fall in a graduated and controlled manner. The shock absorber 20 and sacrificial links 42 alleviate the sudden impact of the fall experienced by the hand and body of the rider. The hand stop 18 and material from which the flexible member 72 is manufactured can improve the rider's purchase on the device 10. The act of holding on to the device 10 maintains the rider's head and neck, at least partially upright and prevents the rider from falling head first from the horse.

A further advantage of the Y-shaped attachment when the device is coupled to the saddle as shown in Fig. 3, is that as the rider falls on one side of a horse, the webbing 30 of the connector means 14 is taut on the opposing side, thereby ensuring that the anchor tie 40, is acting on a central section of the C-shaped stirrup bar 62. This is achieved without the anchor tie 40 tending to slip off the stirrup bar 62 as the rider falls, which may be the case if the connector means 14 were not constrained on both sides of the seat portion 61 of the saddle 60. Additionally, the Y-shaped arrangement allows the horse's back to carry a proportion of the strain, so that it is not all carried by the stirrup bar 62.

The symmetrical nature of the Y-shaped attachment is advantageous since the device 10 defines an identical locus on each side of the saddle 60 within which it operates as a rider falls. Therefore the length of the device 10 can be accurately determined to suit the height of the rider. Alterations or adjustments to compensate for riders of a different weight and/or height are facilitated since the device 10 can be adjusted once to obtain an equal locus in which it operates on either side of the saddle 60.

The device 10 is designed not only to be weight bearing but is also designed with the ability to withstand the sudden impact when a rider falls. Furthermore, since the device 10 is attached to a load-bearing portion of the saddle 60, the device is very stable and reliable. Additionally, placement of the device 10 on a load bearing portion of the saddle 60 means that the rider will tend to fall behind the shoulder portion of the horse when using the device 10. This is safer for the rider as it reduces the risk of being trampled by the horse.

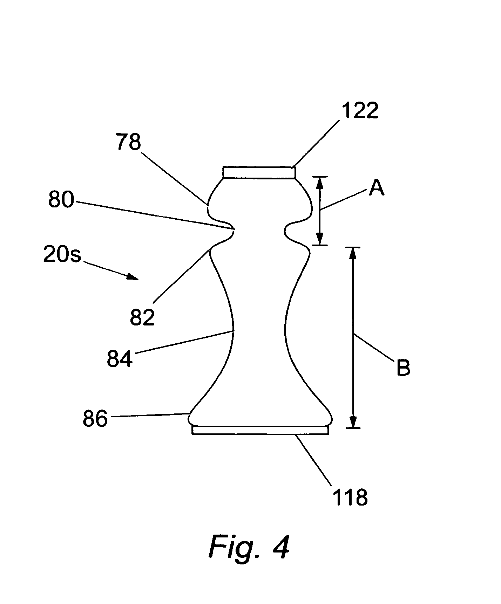

An alternative shock absorber means 20s is shown in Fig. 4 with a hand stop 118 and an end stop 122 at respective ends thereof. The shock absorber means 20s is provided with an axial throughbore (not shown) through which the member 12, 12A, 12B, 72 is accommodated. The shock absorber means 20s is formed with a first shaped portion A and a second shaped portion B. Portion A has a narrow neck region 80 between an outer circumference 78 and an outer circumference 82. Portion B has a graduated neck region 84 between the outer circumference 82 and an outer circumference 86. Due to the narrow neck region 80 of the portion A, a smaller force is required to at least partially compress the neck region 80 between the outer circumference 78 and the outer circumference 82, than that required to compress the more graduated neck region 84. Thus, on application of a compressive force to the shock absorber 20s, the portion A initially at least partially compresses, while application of a greater force is required to at least partially compress portion B. As a result, the impact of the fall can be reduced in two stages; first by compression of portion A, followed by compression of portion B if sufficient force is applied. Thus, the graduated neck region 84 is arranged to cope with severe shocks and jolts.

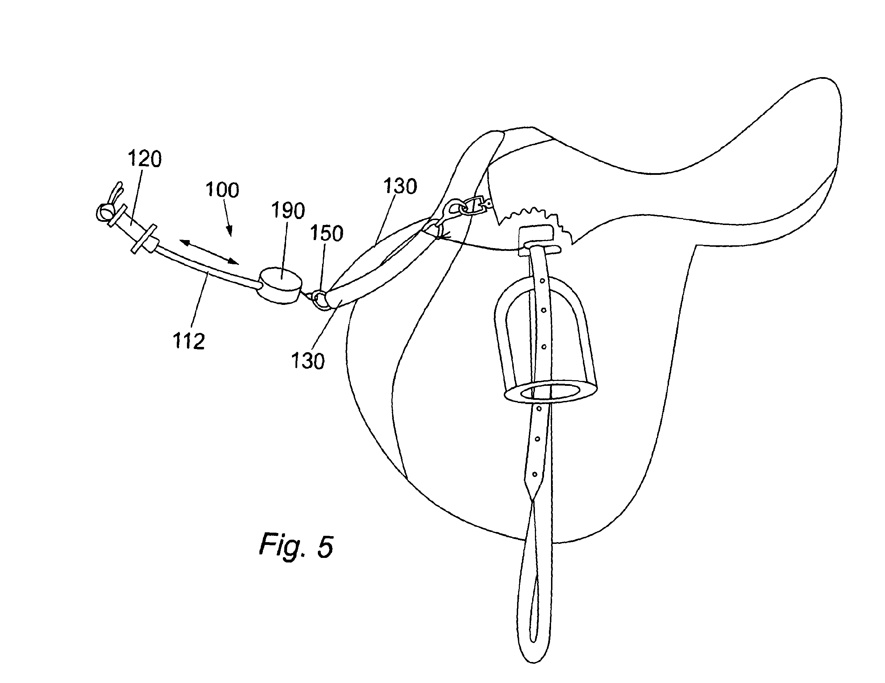

In Fig. 5, an inertia reel 190 is provided on a device 100 to allow the rider to pull out a required length of the flexible member 112. If the rider intends to jump with the horse then a longer length may be chosen compared to purely flat work with the horse which would ideally require a shorter length. In use, the inertia reel 190 will stop further extraction of the flexible member by known internal mechanisms. Inertia reels are available from a number of suppliers, for example: Lifting and Safety Services, Scunthorpe, UK; Warwick and Associates, Arizona, USA and Beaver Sales Pty Ltd, NSW, Australia. Other components shown in Fig. 5, including a shock absorber 120, webbing 130 and a ring 150 (sewn into the webbing) have a similar use as that described for earlier embodiments.

Modifications and improvements can be made without departing from the scope of the invention as defined by the appended claims. For example an automatic release mechanism may be incorporated. This may be in the form of a further weak link which would break should an unseated rider be caught between a horse and some other immovable object and still try to hold on. However this is less preferred since the "weak" link would still need to be strong enough to cushion the fall of a rider. Alternatively the automatic release may be facilitated by a position release mechanism, for example by use of a slotted mechanism, which releases the device from the horse when in an orientation which corresponds with the rider having fallen from the horse.

## Claims

1. A saddle assembly comprising a saddle (60) and a device (10) for breaking a fall of a rider from a horse or the like, the device comprising at least one flexible member having a first end portion and a second end portion, wherein the first end portion is connected to a load bearing portion (62) of a saddle (60) and is provided with at least two connectors (14) for connecting the device (10) to load bearing portions (62) of the saddle (60) at two spaced apart locations, wherein the second end portion (94) is capable of being gripped by a rider and wherein the at least one flexible member (12) comprises a stop member (18) proximate to the second end portion (94) protruding radially outwardly with respect to the flexible member (12);
**characterised in that** the connectors (14) connect the flexible member (12) to stirrup bars (62) provided on opposite sides of the saddle (60).

2. A saddle assembly as claimed in claim 1, wherein the member and its two connectors (14) are arranged in a Y-shaped configuration.

3. A saddle assembly as claimed in any preceding claim, comprising compression means (20) which are compressible in an axial direction.

4. A saddle assembly as claimed in claim 4, wherein the compression means (20) has a bore through which the flexible member (12) extends and wherein the stop member (18) is provided as part of the compression means (20), such that application of a force to the stop member (18) causes compression of the compression means (20).

5. A saddle assembly as claimed in claim 4 or claim 5, wherein the compression means (20) comprises a main body (86) and a neck (84), the neck (84) having a smaller radius than the main body.

6. A saddle assembly as claimed in any of claims 4 to 6, wherein the compression means (20s) comprises two or more body portions (A, B), each adapted to compress on application of a predetermined load, wherein the portions (A, B) are shaped to compress on application of different predetermined loads.

7. A saddle assembly as claimed in any preceding claim, wherein the length of the or each flexible member (12) is user-adjustable.

8. A saddle assembly as claimed in any preceding claim, comprising two flexible members (12A, 12B) adjacent each other which connect with at least one pair, preferably two pairs, of adjacent connectors, each pair of connectors (14) connectable to the saddle.

9. A saddle assembly as claimed any preceding claim, wherein the device (10) is connected to the saddle (60) via sacrificial links (38, 66).

## Patentansprüche

1. Eine Sattelanordnung, die einen Sattel (60) und eine Vorrichtung (10) zum Abfangen eines Falls eines Reiters von einem Pferd oder dergleichen beinhaltet, wobei die Vorrichtung mindestens ein biegsames Element, das einen ersten Endabschnitt und einen zweiten Endabschnitt aufweist, beinhaltet, wobei der erste Endabschnitt mit einem lasttragenden Abschnitt (62) eines Sattels (60) verbunden und mit mindestens zwei Verbindern (14) zum Verbinden der Vorrichtung (10) mit lasttragenden Abschnitten (62) des Sattels (60) an zwei mit Abstand angeordneten Stellen versehen ist, wobei der zweite Endabschnitt (94) von einem Reiter ergriffen werden kann und wobei das mindestens eine biegsame Element (12) ein Stoppelement (18) nahe dem zweiten Endabschnitt (94) beinhaltet, das in Bezug auf das biegsame Element (12) radial nach außen vorsteht;
**dadurch gekennzeichnet, dass** die Verbinder (14) das biegsame Element (12) mit an gegenüberliegenden Seiten des Sattels (60) bereitgestellten Sturzfedern (62) verbinden.

2. Sattelanordnung gemäß Anspruch 1, wobei das Element und seine zwei Verbinder (14) in einer Y-förmigen Konfiguration angeordnet sind.

3. Sattelanordnung gemäß einem der vorhergehenden Ansprüche, die Kompressionsmittel (20) beinhaltet, die in einer axialen Richtung komprimierbar sind.

4. Sattelanordnung gemäß Anspruch 4, wobei das Kompressionsmittel (20) eine Bohrung aufweist, durch die sich das biegsame Element (12) erstreckt, und wobei das Stoppelement (18) als Teil des Kompressionsmittels (20) bereitgestellt wird, so dass die Anwendung einer Kraft auf das Stoppelement (18) die Kompression des Kompressionsmittels (20) verursacht.

5. Sattelanordnung gemäß Anspruch 4 oder Anspruch 5, wobei das Kompressionsmittel (20) einen Hauptkörper (86) und einen Hals (84) beinhaltet, wobei der Hals (84) einen kleineren Radius als der Hauptkörper aufweist.

6. Sattelanordnung gemäß einem der Ansprüche 4 bis 6, wobei das Kompressionsmittel (20s) zwei oder mehrere Körperabschnitte (A, B) beinhaltet, die jeweils angepasst sind, um bei Anwendung einer vorbestimmten Last komprimiert zu werden, wobei die Abschnitte (A, B) geformt sind, um bei Anwendung unterschiedlicher vorbestimmter Lasten komprimiert zu werden.

7. Sattelanordnung gemäß einem der vorhergehenden Ansprüche, wobei die Länge des oder jedes biegsamen Elements (12) von dem Benutzer eingestellt werden kann.

8. Sattelanordnung gemäß einem der vorhergehenden Ansprüche, die zwei aneinander angrenzende biegsame Elemente (12A, 12B) beinhaltet, die mit mindestens einem Paar, vorzugsweise zwei Paaren angrenzender Verbinder, verbunden sind, wobei jedes Paar Verbinder (14) mit dem Sattel verbunden werden kann.

9. Sattelanordnung gemäß einem der vorhergehenden Ansprüche, wobei die Vorrichtung (10) über Opferverbindungen (38, 66) mit dem Sattel (60) verbunden ist.

## Revendications

1. Un assemblage pour selle comprenant une selle (60) et un dispositif (10) destiné à amortir une chute de cheval ou analogue d'un cavalier, le dispositif comprenant au moins un élément flexible ayant une première portion d'extrémité et une deuxième portion d'extrémité, dans lequel la première portion d'extrémité est raccordée à une portion porteuse de charge (62) d'une selle (60) et est pourvue d'au moins deux raccords (14) destinés à raccorder le dispositif (10) à des portions porteuses de charge (62) de la selle (60) au niveau de deux emplacements espacés l'un de l'autre, dans lequel la deuxième portion d'extrémité (94) est à même d'être agrippée par un cavalier et dans lequel cet au moins un élément flexible (12) comprend un élément de butée (18) à proximité de la deuxième portion d'extrémité (94) faisant saillie radialement vers l'extérieur par rapport à l'élément flexible (12) ;
**caractérisé en ce que** les raccords (14) raccordent l'élément flexible (12) à des porte-étrivières (62) fournis sur des côtés opposés de la selle (60).

2. Un assemblage pour selle tel que revendiqué dans la revendication 1, dans lequel l'élément et ses deux raccords (14) sont agencés dans une configuration en forme de Y.

3. Un assemblage pour selle tel que revendiqué dans n'importe quelle revendication précédente, comprenant des moyens de compression (20) qui peuvent être comprimés dans une direction axiale.

4. Un assemblage pour selle tel que revendiqué dans la revendication 4, dans lequel le moyen de compression (20) a un alésage à travers lequel l'élément flexible (12) s'étend et dans lequel l'élément de butée (18) est fourni comme partie du moyen de compression (20), de telle sorte que l'application d'une force sur l'élément de butée (18) occasionne une compression du moyen de compression (20).

5. Un assemblage pour selle tel que revendiqué dans la revendication 4 ou la revendication 5, dans lequel le moyen de compression (20) comprend un corps principal (86) et un col (84), le col (84) ayant un rayon plus petit que le corps principal.

6. Un assemblage pour selle tel que revendiqué dans n'importe lesquelles des revendications 4 à 6, dans lequel le moyen de compression (20s) comprend deux portions de corps ou plus (A, B), chacune adaptée pour se comprimer lors de l'application d'une charge prédéterminée, dans lequel les portions (A, B) sont formées pour se comprimer lors de l'application de charges prédéterminées différentes.

7. Un assemblage pour selle tel que revendiqué dans n'importe quelle revendication précédente, dans lequel la longueur de l'élément flexible ou de chaque élément flexible (12) est ajustable par l'utilisateur.

8. Un assemblage pour selle tel que revendiqué dans n'importe quelle revendication précédente, comprenant deux éléments flexibles (12A, 12B) adjacents l'un à l'autre qui se raccordent avec au moins une paire, de préférence deux paires, de raccords adjacents, chaque paire de raccords (14) étant raccordable à la selle.

9. Un assemblage pour selle tel que revendiqué dans n'importe quelle revendication précédente, dans lequel le dispositif (10) est raccordé à la selle (60) par le biais de liens sacrificiels (38, 66).
